# EUROPEAN PATENT APPLICATION

(11) **EP 3 725 196 A1**
(43) Date of publication of application: **21.10.2020**
(21) Application number: 19170499.8
(22) Date of filing: 23.04.2019
(51) Int. Cl.: A47J 43/07, A47J 27/00, A47J 36/32

(54) **SYSTEM FOR CONTROLLING THE OPERATION OF A KITCHEN MACHINE**

(30) Priority: 18.04.2019 PT 2019115462
(71) Applicant: Modelo Continente Hipermercados, S.A., 4464-503 Senhora da Hora (PT)
(72) Inventor: FARIA ROCHA, DUARTE NUNO, 3800-423 AVEIRO (PT)
(74) Representative: do Nascimento Gomes, Rui

(57) **Abstract**

The present application describes a system for controlling the operation of a kitchen machine. The system is comprised by a product database system which is operatively coupled to at least one kitchen machine. Said product database system is suitable for storing product data related to products used by the kitchen machine during the food preparation. The operation of the kitchen machine is therefore influenced by product data processing which leads to the generation of an operative record that shape the operative conditions of the kitchen machine in order to certain operational requirements be met.

## Description

### TECHNICAL FIELD

The present application is enclosed in the area of kitchen machines, in particular kitchen machines which are electrically ran/operated, typically comprising a mixing cup in which automatic mixing actions are performed and operating with automatic cooking programs, and relates to a system for controlling the operation of a kitchen machine.

### BACKGROUND ART

Current state of the art kitchen machines' control systems are based on approaches which centralize their implementation in internal factors to own kitchen machine, such as controlling power levels, rotational speeds, temperatures or cycles of operation. These functional parameters are monitored during the food preparation step, and compared to reference values to perform the control operation.

As an example, document WO2017211975A1 describes a method for operating a food processor wherein in a preparation mode at least one processing device of the food processor is controlled by measuring a set of operative parameters such as temperature (in particular for the regulated control of a heating power of a heating element of the food processor), agitator speed, stirring time and direction, electrical quantity (motor current of the kitchen machine) or preparation time (total cooking time) etc.

In line with that disclosure, document EP3206095B1 describes a control system to control functions of a cooking apparatus for performing food processing steps thereon. The system comprises a control parameter interface specifically configured to receive, from a remote temperature sensor, temperature data reflecting one or more temperature values associated with a component of food product being processed by the cooking apparatus, being the operation of said apparatus controlled in reference to a standard temperature value.

As can be seen from the documents above, which summarize the common practice, all the cited art addresses the control operation issue on a comparative basis, not considering the features of the products to be used by the kitchen machine in the food preparation step, and how those features can influence the operation of the kitchen machine. In connection to this, none of the cited art seems to provide a kitchen apparatus able to operate as an information hub, making available to the user a wide range of product information data that can be accessed directly from the kitchen machine and which can be processed in order to shape the operation of the apparatus in order to meet certain operational requirements.

### SUMMARY

It is an object of the present application a system for controlling the operation of a kitchen machine. The system now developed is comprised by:
a product database system comprising product data related to the products placed into the mixing cup;
at least one kitchen machine, operatively coupled to the product database system. Said kitchen machine comprising a detection unit, including detection means configured to identify the products placed into the mixing cup, and an interface unit comprising an output module to display manipulated data. Furthermore, the processing unit of the kitchen machine is operable to process the product data of each product detected by the detection unit in order to generate an operative record that is used by the processing unit to execute an automatic cooking program, wherein said automatic cooking program is comprised by an ordered set of operative instructions configured to actuate the kitchen machine elements and by a list of products to be placed into the mixing cup.

In an advantageous configuration of the system, the product data relates to environmental impact factor. In that configuration, an automatic cooking program further includes information related to an apparatus environmental impact factor associated to the operation of the kitchen machine elements. Based on that, the processing unit of the kitchen machine is operable to generate a cooking program environmental impact factor which is based on the environmental impact factor of each product of the automatic cooking program's list of products and on the apparatus environmental impact factor. An operative record is then generated by the processing unit in order to modulate the operation of the kitchen machine according to an environmental impact factor threshold that can be configured by an user. Specifically, depending on the calculated value of the cooking program environmental impact factor, the processing unit may block the execution of an automatic cooking program if the respective cooking program environmental impact factor is bigger than the configured environmental impact factor threshold. Alternatively, the processing unit may generate an operative record able to adapt the apparatus environmental impact factor, so the cooking program environmental impact factor is lower than the environmental impact factor threshold.

It is another object of the present application a method for controlling the operation of a kitchen machine. The method involving the steps of upon selection of an automatic cooking program to be executed by the kitchen machine, detecting the products placed into the mixing cup and processing of the respective product data. Then, prior to the actuation of the kitchen machine, there is a stage of pre-processing, where an operative record is generated based on the processed product data in order to access if a certain standard value is verified or not, which will influence the actuation on the kitchen machine. Said actuation step may involve blocking the operation of the automatic cooking program selected or may involve reprogramming the operative instructions of said automatic cooking program. Finally, the operative record and/or the product data associated to the products placed into the mixing cup are displayed.

### DESCRIPTION OF FIGURES

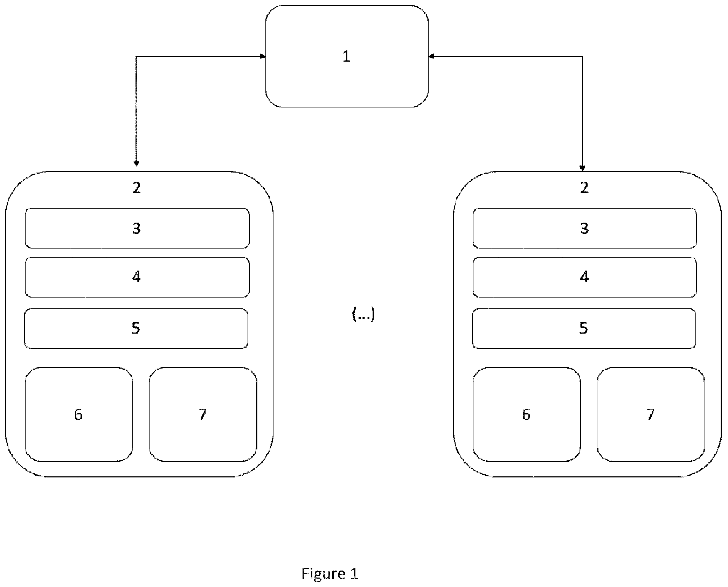

Figure 1 - representation of an embodiment of the system for controlling the operation of a kitchen machine developed, wherein the reference signs represent:
1 - Product database system;
2 - kitchen machine;
3 - kitchen machine elements: i) a mixing cup, ii) mixing means provided in the mixing cup, iii) a base station comprising heating and/or cooling means, and iv) means for automatically measuring weight or volume of products placed into the mixing cup;
4 - memory unit;
5 - processing unit;
6 - detection unit;
7 - interface unit.

### DETAILED DESCRIPTION

The more general and advantageous configurations of the present application are described in the Summary. Such configurations are detailed below in accordance with other advantageous and/or preferred embodiments of implementation of the technology developed.

In an inventive aspect of the present application, it is described a system for controlling the operation of a kitchen machine. By kitchen machine one refers to a device electrically ran and operable according to automatic cooking programs, being comprised by i) a mixing cup, ii) mixing means provided in the mixing cup, iii) a base station comprising heating and/or cooling means, said base station suitable for coupling of the mixing cup and which thereby is able to provide motion to the mixing means, and iv) means for automatically measuring weight or volume of products placed into the mixing cup, from now on referred simply as a scale. In the context of the present application a product corresponds to food products to be used in a kitchen machine during food preparation, particularly, place into the mixing cup, following a given food recipe. In this regard, an automatic cooking program is an ordered set of operative instructions that actuate the kitchen machine elements i) to iv) according to a food recipe. By operative instruction, in the context of the present application, one may refer to commands used to control the operation of the hardware elements i) to iv), specifically in what concerns to speed rotations, heating or cooling temperatures, duty-cycles of each element and power levels - full, medium or low power. Besides that, an automatic cooking program further includes a list of products to be used in the execution of the respective food recipe.

In an innovative aspect of the system, it is comprised by a product database system that stores product data. The database system is comprised by at least one database, and it can be implemented in a network-based-system, being operatively coupled to the kitchen machine by means of a communication link. The database constituting the product database system may be of a relational type, being comprised by a plurality of records, wherein each record is uniquely assigned to a product to be detected by the detection unit and comprises a plurality of fields for storing the respective product data. Said product data may refer to information about the nature of the product such as origin, production conditions, expiration date and environmental impact factor.

The system is further comprised by at least on kitchen machine. Said kitchen machine, besides the elements i) to iv) already described, further includes a detection unit, including detection means configured to identify the products placed into the mixing cup, and an interface unit comprising an output module to display manipulated data.

In one embodiment of the system, the output module of the interface unit comprises output means, preferably a liquid crystal display screen, being operatively coupled to the product database and adapted to display product data associated to the products detected by the detection unit.

The processing unit of the kitchen machine is further operable to process the product data of each product detected by the detection unit, and placed into the mixing cup, in order to generate an operative record that is used by the processing unit to execute an automatic cooking program. In this regard, an operative record is a set of operative instructions that actuates the kitchen machine elements i) to iv), being used to reprogram the operative instructions of each automatic cooking program, according to the product data processed.

In an innovative aspect of the system, the product data relates to environmental impact factor, expressing the ecological impact of each product. In this embodiment of the system, an automatic cooking program comprises also information about an apparatus environmental impactor factor, which relates to the ecological impact caused, exclusively, by the kitchen machine's elements working conditions, such as power consumptions, that arises from the programmed operative parameters such as power levels or duty-cycles. In this context, the processing unit of the kitchen machine is further operable to generate the operative record according to a cooking program environmental impact factor. Such factor is based on the environmental impact factor of each product present in the list of products of an automatic cooking program, and on the respective apparatus environmental impact factor.

In one embodiment, the cooking program environmental impact factor and the apparatus environmental impact factor are calculated locally by the processing unit of the kitchen machine, by means of an environmental impact modelling module therein installed. Alternatively, the referred factors may be calculated by an external environmental impact modelling module, that is operatively coupled to the product database system and to the kitchen machine. By environmental impact modelling module, one may refer to a processing apparatus configured to calculate the environmental impact factor according to an eco-functional model which may be computed by several equations known from the art, using for this purpose a set of eco-functional parameters related the products and to the working conditions of the kitchen machine that are stored in external databases symbolically linked with environmental impact modelling module. In the context of the present application, environmental impact factor may refer to ecological footprint or carbon footprint.

In an innovative aspect of the system, the kitchen machine operation is controlled according to the product data collected from the product database system, and processed by its processing unit. In a general embodiment, the processed product data is compared with a standard value, which is define initially by the user, and the operation of the kitchen machine is define according to the result of said comparison. In a more particular scenario, pursuant to the preceding paragraph, in an innovative aspect of the system, the processing unit of the kitchen machine is configured to compare the cooking program environmental impact factor calculated with an environmental impact factor threshold, representing a configuration parameter originally set by the user of the kitchen machine. The result of this comparison may actuate the kitchen machine in two different ways: by blocking the execution of an automatic cooking program if the respective cooking program environmental impact factor is bigger than the environmental impact factor threshold; or by generating an operative record able to adapt the apparatus environmental impact factor, so the cooking program environmental impact factor is lower than the environmental impact factor threshold. In this regard, the operative record is used to reprogram the working conditions of the kitchen machine, in particular by changing the working parameters influencing the ecological impact of the kitchen machine operation. In one embodiment, the operative record comprises a set of operative parameters related to power levels, driving power and speed rotation of the mixing means, heating or cooling temperatures of the heating and/or cooling means, and duty-cycle.

In one embodiment of the system, the interface unit of the kitchen machine further comprises an input module including writing means. Said writing means are of a keyboard type. Such keyboard being of a software type, wherein the writing means are touch-based and comprise a liquid crystal display screen where an array of virtual keys is displayed to permit an user to perform an input operation by touching the software keyboard. Alternatively, the keyboard is of a hardware type, wherein the writing means comprise a set of real keys to be pressed by an user to perform an input operation. Said input operation can be related to the configuration of product data associated to a product detected by the detection unit, and/or can be related to the configuration of a standard value such as the environmental impact factor threshold. Besides that, the processing unit of kitchen machine is further operable to add new records to the databases of the product database system assigned to products detected by the detection unit that does not have a record assigned yet, and by means of the input module of the interface unit, it may be possible to configure product data related to said new records.

The functioning of the system is based on the identification of the products placed into the mixing cup. In one embodiment of the system, each product to be placed into the mixing cup comprises an unique identification symbol. In one embodiment the identification symbol is symbol is an universal signal and can be a code provided in a tag. Said code may be a n-dimensional code such as a UPC code - Universal Product Code - or a EAN code - European Article Number - or any other barcode symbology, or a QR code. In this regard, the detection means of the detection unit are of optical type, preferably a laser scanner, a LED scanner, a digital camera-based scanner or an omnidirectional scanner.

In an innovative aspect of the present application, it is described a method for controlling the operation of a kitchen machine. In this context, a kitchen machine should be interpreted in the same manner as described above, being an apparatus electrically ran and comprising i) a mixing cup, ii) mixing means provided in the mixing cup, iii) a base station comprising heating and/or cooling means, suitable for coupling of the mixing cup and which thereby is able to provide motion to the mixing means, iv) means for automatically measuring weight or volume of products placed into the mixing cup, v) a processing unit comprising processing means adapted to operate the elements i) to iv) according to automatic cooking programs, said automatic cooking programs comprising an ordered set of operative instructions configured to actuate said kitchen machine elements i) to iv) and a list of products to be placed into the mixing cup; vi) a detection unit and vii) an interface unit comprising an output module. The detection unit comprises detection means adapted to identify the products placed into the mixing cup.

In an innovative aspect of the present application, the method is comprised by a set of steps that will be described below. In the first step of the method, a user selects an automatic cooking program to be executed by the kitchen machine. The automatic cooking program may be selected from a list of automatic cooking programs that are stored in a memory unit of the kitchen machine. Then, as the products of the automatic cooking program's list of products are being placed inside the mixing cup, the detection unit performs a detection operation, identifying each product. By accessing to a product database system, that is operatively coupled to the kitchen machine and where product data are stored, the processing unit of the kitchen machine is able to process product data associated to the products detected by the detection unit. Then, a pre-processing stage follows, representing a simulation stage that reflex the control algorithm underlying the operation of the kitchen machine. This involves the generation of an operative record, based on the processed product data related to the selected automatic cooking program, in order to access if a certain standard value is verified or not, which will influence the actuation on the kitchen machine. In particular, if said standard value is not met, the execution of the respective automatic cooking program is blocked. Alternatively, the operative record may be able to reprogram the operative instructions of the automatic cooking program selected to meet said standard value. Finally, the operative record and/or the product data associated to the products placed into the mixing cup may be displayed to the user, by means of the output module of the kitchen machine's interface unit.

In an innovative aspect of the method, the product data is related to an environmental impact factor. In this context, an automatic cooking program comprises a cooking program environmental impact factor which is based on an environmental impact factor of each product of the automatic cooking program products' list and on an apparatus environmental impact factor. In this embodiment, the step of actuating the kitchen machine includes a comparison between the cooking program environmental impact factor of the selected automatic cooking program and an environmental impact factor threshold, that represents the standard value define by the user. The result of this comparison may lead to blocking the execution of the automatic cooking program selected, if the cooking program environmental impact factor is bigger than the environmental impact factor threshold or may lead to generating an operative record able to adapt the apparatus environmental impact factor, so the cooking program environmental impact factor is lower that the environmental impact factor threshold.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. System for controlling the operation of a kitchen machine, such kitchen machine being electrically ran and comprising i) a mixing cup, ii) mixing means provided in the mixing cup, iii) a base station comprising heating and/or cooling means, said base station suitable for coupling of the mixing cup and which thereby is able to provide motion to the mixing means, iv) means for automatically measuring weight or volume of products placed into the mixing cup, v) a memory unit and vi) a processing unit; the system being **characterized in that** it comprises:
- a product database system comprising product data related to the products placed into the mixing cup;
- at least one kitchen machine, operatively coupled to the product database system, further comprising:
- a detection unit, including detection means configured to identify the products placed into the mixing cup;
- an interface unit comprising an output module to display manipulated data;
wherein,
- the processing unit of the kitchen machine is operable to process the product data of each product detected by the detection unit in order to generate an operative record that is used by the processing unit to execute an automatic cooking program stored in the memory unit of the kitchen machine; and
- the automatic cooking program being comprised by an ordered set of operative instructions configured to actuate the kitchen machine elements i) to iv) and a list of products to be placed into the mixing cup.

2. System according to claim 1, wherein the product data relates to environmental impact factor, and the automatic cooking programs further comprise information related to an apparatus environmental impact factor associated to the operation of the kitchen machine elements i) to iv).

3. System according to claim 2, wherein the processing unit is operable to generate the operative record according to a cooking program environmental impact factor based on:
- the environmental impact factor of each product of the automatic cooking program list of products;
- the apparatus environmental impact factor;

4. System according to claim 3, wherein the cooking program environmental impact factor and the apparatus environmental impact factor are calculated:
- locally by the processing unit of the kitchen machine, by means of an environmental impact modelling module installed in said processing unit;
- by an external environmental impact modelling module, that is operatively coupled to the product database system and to the kitchen machine.

5. System according to claims 3 and 4, wherein the processing unit of the kitchen machine is configured to compare the cooking program environmental impact factor with an environmental impact factor threshold, being further operable to:
- block the execution of an automatic cooking program if the respective cooking program environmental impact factor is bigger than the environmental impact factor threshold; or
- generate an operative record able to adapt the apparatus environmental impact factor, so the cooking program environmental impact factor is lower than the environmental impact factor threshold.

6. System according to any of the previous claims, wherein the operative record comprises a set of operative parameters related to power levels, driving power and speed rotation of the mixing means, heating or cooling temperatures of the heating and/or cooling means, and duty-cycle.

7. System according to any of the previous claims, wherein the detection unit of the kitchen machine is operatively coupled to the product database system; the product database system being comprised by at least one relational database, said database comprising a plurality of records, wherein each record:
- is uniquely assigned to a product to be detected by the detection unit;
- comprises a plurality of fields for storing product data.

8. System according to any of the previous claims, wherein the output module of the interface unit comprises output means, preferably a liquid crystal display screen; the output module being operatively coupled to the product database and adapted to display product data associated to the product detected by the detection unit.

9. System according to any of the previous claims, wherein the processing unit of kitchen machine is further operable to add new records to the databases of the product database system assigned to products detected by the detection unit that does not have a record assigned yet.

10. System according to any of the previous claims, wherein the product data further relates to information about the nature of the product such as origin, production conditions and expiration date.

11. System according to claims 5, 9 and 10, wherein the interface unit further comprises an input module including writing means, preferably the writing means are of a keyboard type; such keyboard being of:
- a software type, wherein the writing means are touch-based and comprise a liquid crystal display screen where an array of virtual keys are displayed to permit an user to perform an input operation by touching the software keyboard;
- hardware type, wherein the writing means comprise a set of real keys to be pressed by an user to perform an input operation;
wherein the input operation performed by the user is related to the configuration of:
- product data associated to a product detected by the detection unit;
- the environmental impact factor threshold.

12. System according to any of the previous claims, wherein the product to be placed into the mixing cup comprises an unique identification symbol such as a code provided in a tag, preferably the code consisting of a n-dimensional code, preferably a barcode or a QR code.

13. System according to claim 11, wherein the detection means of the detection unit are of optical type, preferably a laser scanner, a LED scanner, a digital camera-based scanner or an omnidirectional scanner.

14. Method for controlling the operation of a kitchen machine, such kitchen machine being electrically run and comprising i) a mixing cup, ii) mixing means provided in the mixing cup, iii) a base station comprising heating and/or cooling means, suitable for coupling of the mixing cup and which thereby is able to provide motion to the mixing means, iv) means for automatically measuring weight or volume of products placed into the mixing cup, v) a processing unit comprising processing means adapted to operate the elements i) to iv) according to automatic cooking programs, said automatic cooking programs comprising an ordered set of operative instructions configured to actuate said kitchen machine elements i) to iv) and a list of products to be placed into the mixing cup; vi) a detection unit and vii) an interface unit comprising an output module; the method comprising the following steps:
- Selecting an automatic cooking program to be executed by the kitchen machine;
- Detecting products placed into the mixing cup;
- Processing product data related to each detected product;
- Pre-processing the selected automatic cooking program according to the processed product data in order to generate an operative record;
- Actuating the kitchen machine;
- Displaying the operative record and/or the product data associated to the products placed into the mixing cup.

15. Method according to claim 14, wherein the product data is related to an environmental impact factor and:
- The automatic cooking program comprises a cooking program environmental impact factor which is based on an environmental impact factor of each product of the automatic cooking program products' list and on an apparatus environmental impact factor;
wherein the step of actuating the kitchen machine further includes the steps of:
- comparison between the cooking program environmental impact factor of the selected automatic cooking program and an environmental impact factor threshold;
and
- block the execution of the automatic cooking program selected if the cooking program environmental impact factor is bigger than the environmental impact factor threshold; or
- generate an operative record able to adapt the apparatus environmental impact factor, so the cooking program environmental impact factor is lower that the environmental impact factor threshold.
